# EUROPEAN PATENT SPECIFICATION

(11) **EP 3 471 237 B1**
(45) Date of publication and mention of the grant of the patent: **17.06.2020**
(21) Application number: 17210555.3
(22) Date of filing: 22.12.2017
(51) Int. Cl.: H02J 7/00, H02J 50/10, H05K 7/20

(54) **WIRELESS CHARGER**
DRAHTLOSES LADEGERÄT
CHARGEUR SANS FIL

(30) Priority: 16.10.2017 CN 201710960467; 16.10.2017 CN 201721332556 U
(43) Date of publication of application: 17.04.2019
(73) Proprietor: Shenzhen Flash Cat Electronic Technology Co., Ltd., 518101 Shenzhen Guangdong (CN)
(72) Inventor: FENG, Daobin, Shenzhen, Guangdong 518101 (CN)
(74) Representative: Sach, Greg Robert

(56) References cited:
- CN-A- 106 602 665
- CN-U- 205 724 951
- CN-U- 205 724 986
- US-A1- 2014 007 594
- US-A1- 2016 181 849

## Description

### TECHNICAL FIELD

The present invention relates to a wireless charger, for example a wireless charger with ultrafast charging capability and with efficient cooling function.

### BACKGROUD

Currently wireless chargers of mobile phones on the market comprise desktop flat-type and bracket-type wireless chargers, which do not contain a cooling structure. In use, such wireless chargers cannot perform electromagnetic induction or work efficiently due to the use of environmental constraints, such as the misalignment; the receiving end of the mobile phone has a large amount of heat, and the receiving terminal must reduce the power to control the heat, so that mobile phones are charged slowly due to charging at a low power.

CN106602665A discloses wireless charging system and device capable of intelligently adjusting charging power.

US2016/181849A1 discloses system and method for thermal management in wireless charging devices.

### SUMMARY

The technical problem to be solved by the present invention is to provide wireless charger for solving the problems in the prior art. The wireless charger may be a wireless charger with ultrafast charging capability and with efficient cooling function.

The technical solution adopted by the present invention to solve the above technical problem is as follows:
A wireless charger, comprising a front shell (1) and a rear shell (6), wherein the front shell comprises a plane and a step seat arranged under the plane, in which a smart phone is placed to be charged; an electromagnetic induction charging device is arranged between the front shell (1) and the rear shell (6) and comprises a magnetic induction coil (2) for wirelessly charging a smart phone; moreover, the rear end of the electromagnetic induction device is provided with a cooling fan device, and the cooling fan device comprises: a cooling fan (3) which extracts air to discharge air in the direction of an air duct; a sealing device (4) configured to seal the air duct and the cooling fan together; and an air duct; the front shell (1) is provided with a ring of cooling holes, and air will enter from the cooling holes to increase air flow when the cooling fan works; moreover, an opening (5) is provided on the rear shell (6), and the opening faces the air duct to dissipate heat.

Moreover, a main circuit board (7) and/or a secondary circuit board (8) are further arranged inside the front shell (1) and the rear shell (6), thus constituting a circuit system of the wireless charger.

The circuit system comprises: a power management circuit, a noise reduction filter circuit, a charger power supply circuit, a resonance circuit, an electromagnetic induction coil, a detection circuit and a control circuit, wherein the power management circuit is connected to the noise reduction filter circuit and the charger power supply circuit, and performs noise reduction and filtering on the charger power supply circuit and finally supplies power to the resonance circuit; the charger power supply circuit is connected to the resonance circuit and the resonance circuit is connected to the electromagnetic induction coil, wherein the resonance circuit supplies power to the electromagnetic induction coil.

The resonance circuit comprises: an MOS transistor and a resonant capacitor, wherein the power supply is connected to the MOS transistor, wherein an MCU processor emits a high frequency signal to control the ON/OFF of the MOS transistor through a high-frequency drive circuit, resulting in a high-frequency signal into the resonant capacitor, which uses the characteristics of rapidly charging and discharging of a capacitor and provides an oscillation frequency to the magnetic induction coil at the rear end of the capacitor, so as to achieve the oscillation source required for electromagnetic induction for power transmission.

The detection circuit comprises: a signal amplification IC in which the signal at the output terminal of the resonant capacitor is connected to the signal amplification IC, the received signal is amplified and is connected to the MCU processor, and the signal at the output terminal is analyzed to determine the operational status of the product.

The control circuit comprises: an MCU processor, which controls an output high-frequency signal of the circuit as a master device, checks whether the power supply is abnormal, checks the output feedback signal, and controls an LED display.

The noise reduction filter circuit comprises: a 3A magnetic bead and a plurality of capacitors 106 and 104, which are configured to input the filtering and shaping of the power supply and is connected to S pole of the MOS transistor.

The power management circuit specifically comprises:
a power management circuit, comprising two QC2.0 9V protocol outputs, one of which is a voltage reduction and stabilization circuit reducing from 9V to 5V, while the other is a voltage division detection circuit:
wherein the QC2.0 9V protocols activate the adapter compatible with QC2.0 protocol or above by controlling D- and D + output detection signals through the MCU so that the adapter outputs 9V voltage; and
the voltage reduction circuit stabilizes the input power to be 5V to provide power supply to the MCU/fan/LED through a K7412 voltage reduction IC, wherein the voltage division detection circuit uses a voltage divider resistor to divide the input voltage into an MCU-detectable voltage to judge whether the input voltage is normal.

The present invention utilizes the principle of fan cooling to define air holes in the electromagnetic induction area of a mobile phone and increases the cooling effect by increasing the air convection on the contact surface of the mobile phone using the principle of ventilation so as to achieve the best charging effect on the mobile phone terminal. (Actually, in the 6W charging test, the temperature of the mobile phone may be lowered by 3 degrees centigrade to 8 degrees centigrade.)

Additional features and advantages of the present invention will be set forth in the following description, and in part will be obvious from the description, or may be learned by practice of the invention. The objectives and other advantages of the invention may be realized and attained by the structure particularly pointed out in the written description, claims and accompanying drawings.

### BRIEF DESCRIPTION OF THE DRAWINGS

The present invention is described in detail below with reference to the accompanying drawings to make the above advantages of the present invention clearer, wherein
FIG. 1 is a schematic structural diagram of a wireless charger according to the present invention;

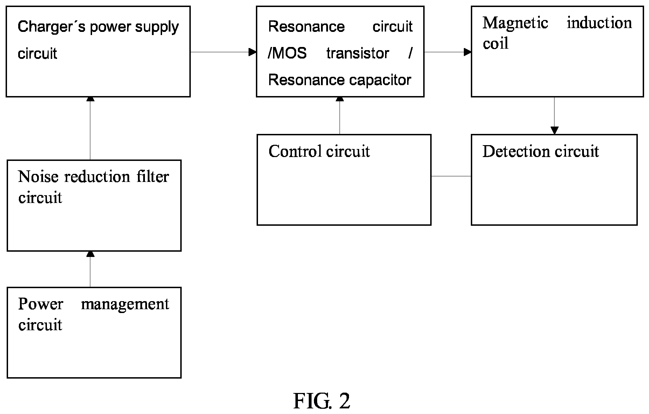

FIG. 2 is a circuit block diagram of a wireless charger according to the present invention.

### DESCRIPTION OF THE EMBODIMENTS

The embodiments of the present invention are described in detail below with reference to the accompanying drawings and embodiments, so as to fully understand and implement the implementation process of how to apply the technical means to solve the technical problem and achieve the technical effects by the present invention. It should be noted that, as long as no conflict is formed, each embodiment in the present invention and each feature in each embodiment may be combined with each other, and the formed technical solutions are all within the protection scope of the present invention.

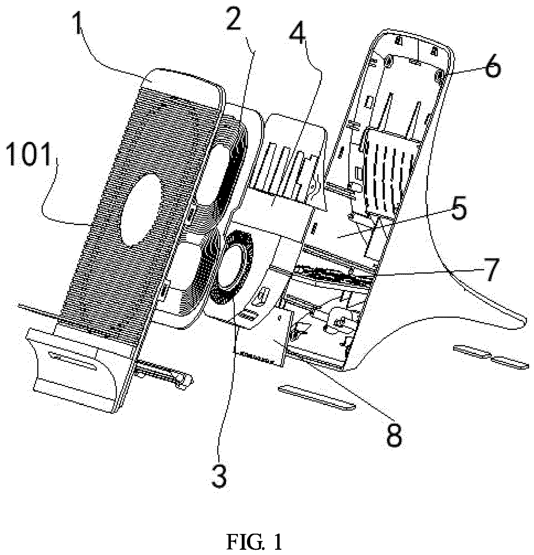

As shown in FIG. 1, the present invention utilizes the principle of fan cooling to define air holes in the electromagnetic induction area of a mobile phone and increases the cooling effect by increasing the air convection on the contact surface of the mobile phone using the principle of ventilation so as to achieve the best charging effect on the mobile phone terminal. (Actually, in the 6W charging test, the temperature of the mobile phone may be lowered by 3 degrees centigrade to 8 degrees centigrade.)

There are air holes defined in the electromagnetic induction area of the mobile phone. When it is detected that a load is connected to a wireless charger, the ventilation fan in the charger will be turned on to utilize the air convection principle to cool the electromagnetic induction area of the mobile phone.

Moreover, when the mobile phone stops charging due to a high temperature (the mobile phone will turn off charging and cannot be fully charged if the ambient temperature is too high or for the purpose of protecting the battery of the mobile phone, etc.), the wireless charger fan will continue to work until it is detected that the phone is fully charged.

The charger utilizes an electromagnetic induction manner for power transmission.

The electronic part involves:
1. Power management
   Power management is a management of the basic parameters of the input power supply, and the noise reduction filter supplies power to the power supply circuit of the wireless charger.
2. Resonance circuit
   The resonance circuit charges the resonant capacitor and achieves the resonant frequency required for electromagnetic induction through the switching principle of the MOS transistor, and uses the high-performance capacitor discharging principle to supply power to the electromagnetic induction coil at the receiving terminal.
3. Control circuit.
   The MOS transistor is controlled to be ON/OFF to turn on/off the work of the entire circuit, and control the output power by controlling the resonant frequency.
4. Detection circuit.
   The electromagnetic induction signal is used to collect the working condition of the charger and the signal feedback at the receiving terminal, and to protect the various parts of the circuit. For example, it is determined whether the output is opened or closed by the situation of the over-current/over-voltage/over-temperature/abnormal work.

The innovation part of the product is as follows:
1. The cooling structure is proposed and put into effect first.
2. The actual use of the mobile phone terminal is docked first to control the ON state of the cooling fan. If the mobile phone stops charging due to overheating, the fan will be smartly turned on to cool the mobile phone so as to protect the mobile phone battery.

Specifically, a wireless charger comprises a front shell (1) and a rear shell (6), wherein the front shell comprises a plane and a step seat arranged under the plane, in which a smart phone is placed to be charged; an electromagnetic induction charging device is arranged between the front shell (1) and the rear shell (6) and comprises a magnetic induction coil (2) for wirelessly charging a smart phone; moreover, the rear end of the electromagnetic induction device is provided with a cooling fan device, and the cooling fan device comprises: a cooling fan (3) which extracts air to discharge air in the direction of an air duct; a sealing device (4) configured to seal the air duct and the cooling fan together; and an air duct; the front shell (1) is provided with a ring of cooling holes, and air will enter from the cooling holes to increase air flow when the cooling fan works; moreover, an opening (5) is provided on the rear shell (6), and the opening faces the air duct to dissipate heat.

Moreover, a main circuit board (7) and/or a secondary circuit board (8) are further arranged inside the front shell (1) and the rear shell (6), thus constituting a circuit system of the wireless charger.

The circuit system comprises: a power management circuit, a noise reduction filter circuit, a charger power supply circuit, a resonance circuit, an electromagnetic induction coil, a detection circuit and a control circuit, wherein the power management circuit is connected to the noise reduction filter circuit and the charger power supply circuit, and performs noise reduction and filtering on the charger power supply circuit and finally supplies power to the resonance circuit; the charger power supply circuit is connected to the resonance circuit and the resonance circuit is connected to the electromagnetic induction coil, wherein the resonance circuit supplies power to the electromagnetic induction coil.

The resonance circuit comprises: an MOS transistor and a resonant capacitor, wherein the power supply is connected to the MOS transistor, wherein an MCU processor emits a high frequency signal to control the ON/OFF of the MOS transistor through a high-frequency drive circuit, resulting in a high-frequency signal into the resonant capacitor, which uses the characteristics of rapidly charging and discharging of a capacitor and provides an oscillation frequency to the magnetic induction coil at the rear end of the capacitor, so as to achieve the oscillation source required for electromagnetic induction for power transmission.

The detection circuit comprises: a signal amplification IC in which the signal at the output terminal of the resonant capacitor is connected to the signal amplification IC, the received signal is amplified and is connected to the MCU processor, and the signal at the output terminal is analyzed to determine the operational status of the product.

The control circuit comprises: an MCU processor, which controls an output high-frequency signal of the circuit as a master device, checks whether the power supply is abnormal, checks the output feedback signal, and controls an LED display.

The noise reduction filter circuit comprises: a 3A magnetic bead and a plurality of capacitors 106 and 104, which are configured to input the filtering and shaping of the power supply and is connected to S pole of the MOS transistor.

The power management circuit specifically comprises:
a power management circuit, comprising two QC2.0 9V protocol outputs, one of which is a voltage reduction and stabilization circuit reducing from 9V to 5V, while the other is a voltage division detection circuit:
wherein the QC2.0 9V protocols activate the adapter compatible with QC2.0 protocol or above by controlling D- and D + output detection signals through the MCU so that the adapter outputs 9V voltage; and
the voltage reduction circuit stabilizes the input power to be 5V to provide power supply to the MCU/fan/LED through a K7412 voltage reduction IC, wherein the voltage division detection circuit uses a voltage divider resistor to divide the input voltage into an MCU-detectable voltage to judge whether the input voltage is normal.

The working principle of the device is as follows: the front shell is provided with a ring of cooling holes, and air will enter from the cooling holes to increase air flow when the cooling fan works. The magnetic induction coil will take away heat at work due to the air circulation. The cooling fan extracts air to discharge air in the direction of an air duct. The air duct and the cooling fan are sealed to ensure that hot air will not overflow. In addition, the air outlet defines opening in the air duct direction, reducing wind resistance and reducing noises.

Working relation: the power supply is connected to the secondary circuit board through a Micro USB, the secondary circuit board is connected with the main circuit board through the cable, the main circuit board detects the power supply and will cycle to self-test and then enter the standby state; the secondary circuit board has LED indicator indicating the status of the product with the condition of the main circuit board. A blue lamp is turned on in the self-test, a green lamp is turned on in the load, and the lamp is turned off when the load is full of signals. The main circuit board detects the output signal through the magnetic induction coil to determine the working status of the product.

Finally, it should be noted that the foregoing descriptions are merely preferred embodiments of the present invention and are not used to limit the present invention. Although the present invention is described in detail with reference to the foregoing embodiments, it will be apparent to those skilled in the art that the technical solutions described in each of the foregoing embodiments may be modified or some technical features in the embodiments may be equivalently replaced.

## Claims

1. A wireless charger, comprising a front shell (1) and a rear shell (6), wherein the front shell comprises a plane and a step seat arranged under the plane, in which a smart phone can be placed to be charged; an electromagnetic induction charging device is arranged between the front shell (1) and the rear shell (6) and comprises a magnetic induction coil (2) for wirelessly charging a smart phone; **characterized in that**, a rear end of the electromagnetic induction device is provided with a cooling fan device, and the cooling fan device comprises: a cooling fan (3) adapted to extract air to discharge air in the direction of an air duct; a sealing device (4) configured to seal the air duct and the cooling fan together; and an air duct; the front shell (1) is provided with a ring of cooling holes to enable air to enter from the cooling holes to increase airflow when the cooling fan works; and wherein, an opening (5) is provided on the rear shell (6), and the opening faces the air duct to dissipate heat.

2. The wireless charger according to claim 1, wherein a main circuit board (7) and/or
a secondary circuit board (8) are further arranged inside the front shell (1) and the rear shell (6), thus constituting a circuit system of the wireless charger.

3. The wireless charger according to claim 2, wherein the circuit system comprises: a power management circuit, a noise reduction filter circuit, a charger power supply circuit, a resonance circuit, an electromagnetic induction coil, a detection circuit and
a control circuit, wherein the power management circuit is connected to the noise reduction filter circuit and the charger power supply circuit, and performs noise reduction and filtering on the charger power supply circuit and finally supplies power to the resonance circuit; the charger power supply circuit is connected to the resonance circuit and the resonance circuit is connected to the electromagnetic induction coil, wherein the resonance circuit supplies power to the electromagnetic induction coil.

4. The wireless charger according to claim 3, wherein the resonance circuit comprises: an MOS transistor and a resonant capacitor, wherein the power supply is connected to the MOS transistor, wherein an MCU processor adapted to emit a high frequency signal to control the ON/OFF of the MOS transistor through a high-frequency drive circuit, resulting in a high-frequency signal into the resonant capacitor, which uses the characteristics of rapidly charging and discharging of a capacitor and provides an oscillation frequency to the magnetic induction coil at the rear end of the capacitor, so as to achieve the oscillation source required for electromagnetic induction for power transmission.

5. The wireless charger according to claim 3, wherein the detection circuit comprises: a signal amplification IC in which the signal at the output terminal of the resonant capacitor is connected to the signal amplification IC, the received signal is amplified and is connected to the MCU processor, and the signal at the output terminal is analyzed to determine the operational status of the product.

6. The wireless charger according to claim 3, wherein the control circuit comprises:
an MCU processor adapted to control an output high-frequency signal of the circuit as a master device, checks whether the power supply is abnormal, checks the output feedback signal, and controls an LED display.

7. The wireless charger according to claim 3, wherein the noise reduction filter circuit comprises: a 3A magnetic bead and a plurality of capacitors 106 and 104, which are configured to input the filtering and shaping of the power supply and is connected to S pole of the MOS transistor.

8. The wireless charger according to claim 1 or 2, wherein the power management circuit specifically comprises:
a power management circuit, comprising two Quick Charge 2.0, 9-Voltage, QC2.0 9V, protocol outputs, one of which is a voltage reduction and stabilization circuit reducing from 9V to 5V, while the other is a voltage division detection circuit:
wherein the QC2.0 9V protocols activate the adapter compatible with Quick Charge 2.0, QC2.0, protocol or above by controlling D- and D + output detection signals through the MCU so that the adapter outputs 9V voltage; and
the voltage reduction circuit stabilizes the input power to be 5V to provide power supply to the MCU/fan/LED through a K7412 voltage reduction IC, wherein the voltage division detection circuit uses a voltage divider resistor to divide the input voltage into an MCU-detectable voltage to judge whether the input voltage is normal.

## Patentansprüche

1. Ein drahtloses Ladegerät, bestehend aus einer vordere Schale (1) und eine hintere Schale (6), wobei die vordere Schale aus einer glatten Fläche und einer unterhalb der Fläche angeordneten Stütze besteht, auf der ein Smartphone zum Aufladen platziert werden kann; eine elektromagnetische Induktionsladevorrichtung ist zwischen der vorderen Schale (1) und der hinteren Schale (6) angeordnet und besteht aus einer magnetischen Induktionsspule (2) zum drahtlosen Aufladen eines Smartphones; **dadurch gekennzeichnet, dass** ein hinteres Ende der elektromagnetischen Induktionsvorrichtung mit einer Kühlvorrichtung versehen ist und die Kühlvorrichtung besteht aus: einem Kühlerlüfter (3), der so ausgelegt ist, dass er Luft absaugt, um Luft in Richtung eines Luftkanals auszustoßen; eine Dichtungsvorrichtung (4), die so konfiguriert ist, dass sie den Luftkanal und den Kühlerlüfter zusammen abdichtet; und einem Luftkanal; wobei die vordere Schale (1) mit ringförmig angeordneten Kühlöffnungen versehen ist, damit Luft aus den Kühlöffnungen eintreten kann, um den Luftstrom zu erhöhen, wenn der Kühlerlüfter arbeitet; und wobei eine Öffnung (5) in der hinteren Schale (6) vorgesehen ist und die Öffnung dem Luftkanal zugewandt ist, um Wärme abzuleiten.

2. Das drahtloses Ladegerät nach Anspruch 1, wobei eine Hauptleiterplatte (7) und/oder eine sekundäre Leiterplatte (8) weiter innerhalb der vorderen Schale (1) und der hinteren Schale (6) angeordnet sind, wodurch ein Schaltungssystem des drahtlosen Ladegeräts gebildet wird.

3. Das drahtlose Ladegerät nach Anspruch 2, wobei das Schaltungssystem aus folgendem besteht: eine Energieverwaltungsschaltung, eine Rauschunterdrückungs-Filterschaltung, eine Ladegerät-Energieversorgungsschaltung, einen Resonanzkreis, eine elektromagnetische Induktionsspule, eine Erkennungsschaltung und eine Steuerschaltung, wobei die Energieverwaltungsschaltung mit der Rauschunterdrückungs-Filterschaltung und der Ladegerät-Energieversorgungsschaltung verbunden ist und eine Rauschunterdrückung und Filterung an der Ladegerät-Energieversorgungsschaltung durchführt und schließlich dem Resonanzkreis Energie zuführt; die Ladegerät-Energieversorgungsschaltung mit dem Resonanzkreis verbunden ist und der Resonanzkreis mit der elektromagnetischen Induktionsspule verbunden ist, wobei der Resonanzkreis der elektromagnetischen Induktionsspule Energie zuführt.

4. Das drahtloses Ladegerät nach Anspruch 3, wobei die Resonanzschaltung folgendes umfasst: einen MOS-Transistor und einen Resonanzkondensator, wobei die Stromversorgung mit dem MOS-Transistor verbunden ist, wobei ein MCU-Prozessor, der so ausgelegt ist, dass er ein Hochfrequenzsignal emittiert, um das EIN/AUS des MOS-Transistors durch eine Hochfrequenztreiberschaltung zu steuern, was zu einem Hochfrequenzsignal in den Resonanzkondensator führt, der die Eigenschaften des schnellen Ladens und Entladens eines Kondensators nutzt und der magnetischen Induktionsspule am hinteren Ende des Kondensators eine Oszillationsfrequenz bereitstellt, um die für die elektromagnetische Induktion zur Leistungsübertragung erforderliche Oszillationsquelle zu erreichen.

5. Das drahtloses Ladegerät nach Anspruch 3, wobei die Erkennungsschaltung umfasst: einen Signalverstärkungs-IC, bei dem das Signal an der Ausgangsklemme des Resonanzkondensators mit dem Signalverstärkungs-IC verbunden ist, das empfangene Signal wird verstärkt und mit dem MCU-Prozessor verbunden und das Signal an der Ausgangsklemme analysiert wird, um den Betriebszustand des Produkts zu bestimmen.

6. Das drahtloses Ladegerät nach Anspruch 3, wobei die Steuerschaltung folgendes umfasst: einen MCU-Prozessor, der so ausgelegt ist, dass er ein Ausgangs-Hochfrequenzsignal der Schaltung als Master-Gerät steuert, prüft, ob die Stromversorgung abnormal ist, prüft das Ausgangs-Rückkopplungssignal und steuert eine LED-Anzeige.

7. Das drahtloses Ladegerät nach Anspruch 3, wobei die Rauschunterdrückungs-Filterschaltung folgendes umfasst: eine 3A-Magnetperle und eine Vielzahl von Kondensatoren 106 und 104, die so konfiguriert sind, dass sie die Filterung und Formung der Stromversorgung eingeben und mit dem S-Anschluss des MOS-Transistors verbunden sind.

8. Das drahtlose Ladegerät nach Anspruch 1 oder 2, wobei die Energieverwaltungsschaltung speziell folgendes umfasst:
eine Leistungsverwaltungsschaltung, die zwei Protokollausgänge für Quick Charge 2.0, 9 V-Spannung (QC2.0 9V) umfasst, von denen einer eine Spannungsreduktions- und Stabilisierungsschaltung ist, die von 9 V auf 5 V reduziert, während der andere eine Spannungsteilungserfassungsschaltung ist:
wobei die QC2.0 9 V-Protokolle den Adapter, der mit dem Quick Charge 2.0 (QC2.0)-Protokoll oder darüber kompatibel ist, aktivieren, indem D-und D+-Ausgangsdetektionssignale durch die MCU gesteuert werden, so dass der Adapter 9 V-Spannung ausgibt; und
die Spannungsreduktionsschaltung die Eingangsleistung auf 5 V stabilisiert, um eine Stromversorgung für die MCU/Lüfter/LED durch einen K7412-Spannungsreduktions-IC bereitzustellen, wobei die Spannungsteilungserfassungsschaltung einen Spannungsteilerwiderstand verwendet, um die Eingangsspannung in eine von der MCU erfassbare Spannung zu teilen, um zu beurteilen, ob die Eingangsspannung normal ist.

## Revendications

1. Chargeur sans fil, comprenant une coque avant (1) et une coque arrière (6), dans lequel la coque avant comprend un plan et un siège en forme de marche agencé sous le plan, dans lequel un téléphone intelligent peut être placé pour être chargé ; un dispositif de charge par induction électromagnétique est agencé entre la coque avant (1) et la coque arrière (6) et comprend une bobine d'induction magnétique (2) pour le chargement sans fil d'un téléphone intelligent ; **caractérisé en ce qu'**une extrémité arrière du dispositif d'induction électromagnétique est pourvue d'un dispositif à ventilateur de refroidissement, et le dispositif à ventilateur de refroidissement comprend : un ventilateur de refroidissement (3) adapté pour extraire de l'air pour évacuer l'air en direction d'un conduit d'air ; un dispositif d'étanchéité (4) configuré pour sceller le conduit d'air et le ventilateur de refroidissement l'un avec l'autre ; et un conduit d'air ; la coque avant (1) est munie d'un anneau de trous de refroidissement pour permettre à de l'air d'entrer par les trous de refroidissement pour augmenter le flux d'air lorsque le ventilateur de refroidissement fonctionne ; et dans lequel une ouverture (5) est prévue sur la coque arrière (6), et l'ouverture fait face au conduit d'air pour dissiper la chaleur.

2. Chargeur sans fil selon la revendication 1, dans lequel une carte de circuit imprimé principale (7) et/ou une carte de circuit imprimé secondaire (8) sont en outre agencées à l'intérieur de la coque avant (1) et de la coque arrière (6), constituant ainsi un système à circuit du chargeur sans fil.

3. Chargeur sans fil selon la revendication 2, dans lequel le système à circuit comprend : un circuit de gestion d'alimentation, un circuit de filtrage de réduction de bruit, un circuit d'alimentation en énergie de chargeur, un circuit de résonance, une bobine d'induction électromagnétique, un circuit de détection et un circuit de commande, dans lequel le circuit de gestion d'alimentation est connecté au circuit de filtrage de réduction de bruit et au circuit d'alimentation en énergie de chargeur, et effectue une réduction et un filtrage de bruit sur le circuit d'alimentation en énergie de chargeur et fournit enfin de l'énergie au circuit de résonance ; le circuit d'alimentation en énergie de chargeur est connecté au circuit de résonance et le circuit de résonance est connecté à la bobine d'induction électromagnétique, le circuit de résonance alimentant en énergie la bobine d'induction électromagnétique.

4. Chargeur sans fil selon la revendication 3, dans lequel le circuit de résonance comprend un transistor MOS et un condensateur résonnant, dans lequel l'alimentation en énergie est connectée au transistor MOS, dans lequel un processeur de MCU adapté pour émettre un signal haute fréquence pour contrôler l'ouverture/fermeture du transistor MOS par l'intermédiaire d'un circuit d'attaque à haute fréquence, résultant en un signal à haute fréquence dans le condensateur résonnant, qui utilise les caractéristiques de charge et de décharge rapides d'un condensateur et fournit une fréquence d'oscillation à la bobine d'induction magnétique à l'extrémité arrière du condensateur, de manière à former la source d'oscillation nécessaire à l'induction électromagnétique pour la transmission d'énergie.

5. Chargeur sans fil selon la revendication 3, dans lequel le circuit de détection comprend : un circuit intégré d'amplification de signal dans lequel le signal à la borne de sortie du condensateur résonnant est connecté au circuit intégré d'amplification de signal, le signal reçu est amplifié et est connecté au processeur de MCU et le signal à la borne de sortie est analysé pour déterminer l'état de fonctionnement du produit.

6. Chargeur sans fil selon la revendication 3, dans lequel le circuit de commande comprend : un processeur de MCU adapté pour commander, en tant que dispositif maître, un signal de sortie à haute fréquence du circuit, vérifie si l'alimentation en énergie est anormale, vérifie le signal de retour de sortie, et commande un affichage LED.

7. Chargeur sans fil selon la revendication 3, dans lequel le circuit de filtrage de réduction de bruit comprend une perle magnétique 3A et une pluralité de condensateurs 106 et 104 qui sont configurés pour introduire le filtrage et la mise en forme de l'alimentation en énergie et sont connectés au pôle S du transistor MOS.

8. Chargeur sans fil selon la revendication 1 ou 2, dans lequel le circuit de gestion d'énergie comprend précisément :
un circuit de gestion de l'alimentation, comprenant deux sorties de protocole Quick Charge 2.0, 9V (QC2.0 9V), l'une desquelles étant un circuit de réduction et de stabilisation de tension permettant de passer de 9V à 5V, tandis que l'autre est un circuit de détection de division de tension :
dans lequel les protocoles QC2.0 9V activent l'adaptateur compatible avec le protocole Quick Charge 2.0 (QC2.0) ou supérieur en contrôlant les signaux de détection de sortie D- et D + par l'intermédiaire de la MCU de sorte que l'adaptateur délivre une tension de 9V ; et
le circuit de réduction de tension stabilise la puissance d'entrée à 5 V de manière à fournir une alimentation en énergie à la MCU/au ventilateur/à la LED par l'intermédiaire d'un circuit intégré de réduction de tension K7412, dans lequel le circuit de détection de division de tension utilise une résistance de diviseur de tension pour diviser la tension d'entrée en une tension détectable par la MCU pour juger si la tension d'entrée est normale.
